# EUROPÄISCHE PATENTSCHRIFT

(11) **EP 1 507 107 B1**
(45) Veröffentlichungstag und Bekanntmachung des Hinweises auf die Patenterteilung: **23.04.2008**
(21) Anmeldenummer: 04013316.7
(22) Anmeldetag: 05.06.2004
(51) Int. Cl.: F16K 1/226, F16J 15/32

(54) **Dichtmanschette für Klappenventile**
Butterfly valve with sealing packing
Vanne papillon à manchette d'étanchéité

(30) Priorität: 15.08.2003 DE 10338119
(43) Veröffentlichungstag der Anmeldung: 16.02.2005
(73) Patentinhaber: Carl Freudenberg KG, 69469 Weinheim (DE)
(72) Erfinder: Klenk, Thomas, Dr., 69465 Weinheim (DE); Clemens, Markus, 64385 Reichelsheim (DE); Ziegler, Günter, 68259 Mannheim (DE); Kramer, Thomas, 64668 Zotzenbach (DE)

(56) Entgegenhaltungen:
- DE-A- 2 240 408
- DE-A- 2 846 439
- DE-A- 3 607 736
- DE-A- 19 919 281
- GB-A- 2 287 734
- US-A- 4 298 562

## Beschreibung

Die vorliegende Erfindung betrifft ein Klappenventil mit einem Ventilgehäuse mit einer Ventilgehäuseinnenwandung, einer Ventilklappe und einer Dichtmanschette aus gummielastischem Material zum Abdichten zwischen der Ventilgehäuseinnenwandung und der Ventilklappe.

### Stand der Technik

Klappenventile sind bekannt. Sie werden zur Steuerung des Durchgangs von flüssigem Fluid durch Rohrleitungssysteme insbesondere in der Getränke- und Lebensmittelindustrie eingesetzt. Klappenventile zeichnen sich in der Regel durch ein im wesentlichen ringförmiges Gehäuse mit einer Fluiddurchgangsöffnung auf, in welcher eine Ventilklappe mit im wesentlichen rundem Rand drehbar um eine Querachse montiert ist, um die Fluiddurchgangsöffnung wahlweise selektiv oder vollständig zu verschließen. Die Ventilklappe wird durch eine Antriebswelle angetrieben, die durch eine Querbohrung des Gehäuses hindurchgeht, und wird durch eine hintere Welle gehalten, die in einer hinteren Bohrung koaxial zu der Querbohrung und diametral gegenüberliegend in dem Gehäuse angeordnet ist. Um die Dichtheit zu sichern, ist eine Manschette aus einem gummielastischen Material in der Fluiddurchgangsöffnung zwischen der Gehäuseinnenwandung und der Ventilklappe angeordnet. In Schließstellung legt sich die Ventilklappe mit ihrem Aussenumfang dichtend an die innere Umfangsfläche der Dichtmanschette an. Die außere Umfangsfläche der im wesentlichen hohlzylinderförmigen Dichtmanschette liegt an der Innenumfangsfläche des Ventilgehäuses an. In einem mittleren ringförmigen Bereich ist die Manschette von zwei diametral einander gegenüberliegenden Querdurchgängen durchsetzt, welche von der Antriebswelle und der hinteren Welle durchquert sind.

Die Dichtmanschette muss so ausgelegt sein, dass einerseits eine ausreichende Dichtigkeit gewährleistet ist, andererseits aber das Drehmoment zur Bewegung der Ventilklappe eine bestimmte Grenze nicht überschreitet, da aus Kostengründen nicht beliebig leistungsfähige Stellmotoren eingesetzt werden können.

Man hat nun seit längerem festgestellt, dass es im Betrieb bei erhöhten Temperaturen zu einer Erhöhung des für die Betätigung des Ventils erforderlichen Drehmoments kommen kann. So konnte festgestellt werden, dass der Reibwert einer Dichtmanschette, der bei Raumtemperatur üblicherweise bei 20 Nm liegt, bei einer im Betrieb üblichen Temperaturerhöhung um ca. 100 °C um ca. 10 Nm zunimmt. Zwar ist es bekannt, Dichtmanschetten der beschriebenen Art an ihrem Aussenumfang mit sogenannten Entlastungsrillen zu versehen, diese Entlastungsrillen befinden sich jedoch beiderseits der Anlagefläche für die Ventilklappe und reichen somit nicht aus, um der unerwünschten Erhöhung des Drehmoments entgegenzuwirken.

Aus der DE 36 07 736 A1 ist ein Klappenventil bekannt, bei welchem das Dichtelement, das aus einem nicht oder nur wenig elastischen Material besteht, zur Erzeugung einer Rückstellkraft mit einer Federbrücke armiert ist. Die Federbrücke kann aus einem Metall bestehen.

### Darstellung der Erfindung

Aufgabe der Erfindung ist, ein Klappenventil der eingangs beschriebenen Art so weiterzuentwickeln, dass die Ventilklappe auch bei erhöhten Betriebstemperaturen weitgehend störungsfrei betätigbar ist.

Diese Aufgabe wird gelöst mit einem Klappenventil mit allen Merkmalen des Patentanspruchs 1. Vorteilhafte Ausgestaltungen der Erfindung werden in den Unteransprüchen beschrieben.

Gemäß der Erfindung wird bei einem Klappenventil mit einem Ventilgehäuse mit einer Ventilgehäuseinnenwandung, einer Ventilklappe und einer Dichtmanschette aus gummielastischem Material zum Abdichten zwischen der Ventilgehäuseinnenwandung und der Ventilklappe das gummielastische Material wenigstens im Bereich der Anlagefläche der Ventilklappe wenigstens teilweise durch ein Material ersetzt, dessen thermische Ausdehnung in etwa der des Gehäusematerials entspricht oder geringer ist und dessen elastische Eigenschaften in etwa denen des Dichtmanschettenmaterials entsprechen und/oder das in Form von Federn, vorzugsweise Blatt- oder Spiralfedern, in die Dichtmanschette eingebracht wird.

Es hat sich gezeigt, dass die oben beschriebene Erhöhung des Reibwerts der Dichtmanschette bei erhöhten Betriebstemperaturen offensichtlich auf die Unterschiede im thermischen Ausdehnungsverhalten der üblicherweise für die Dichtmanschetten eingesetzten Elastomer- oder PTFE-Materialien und des für das Ventilgehäuse verwendeten Stahls zurückzuführen ist. So ist die thermische Ausdehnung der Elastomere in der Regel um einen Faktor 10 größer als die des Stahls. Durch das Ersetzen des Elastomers durch ein Material, dessen thermische Ausdehnung der des Stahls entspricht oder noch geringer ist, im Bereich des Dichtsitzes wird verhindert, dass sich der Dichtspalt zwischen dem Gehäuse und der Ventilklappe bei Temperaturerhöhung so weit verengt, dass die Reibwerte unerwünscht hohe Werte annehmen. Die Ventilklappe bleibt somit auch bei hohen Temperaturen störungsfrei betätigbar.

Generell gilt, dass die Menge bzw. die geometrische Anordnung des eingebrachten Materials so gewählt werden muss, dass die thermische Ausdehnung des verbleibenden Dichtmanschettenmaterials weitgehend kompensiert wird, ohne dass das elastische Verhalten der Dichtmanschette wesentlich beeinträchtigt wird. Die Kombination geeigneter Materialien und Geometrien zur Erzielung des erfindungsgemäßen Erfolgs sind dem Fachmann ohne erfinderisches Zutun leicht möglich.

In einer bevorzugten Ausführungsform der Erfindung weist die Dichtmanschette an ihrem Aussenumfang im Bereich des Dichtsitzes eine umlaufende Nut auf, die lediglich im Bereich der Durchgangsbohrungen für die Antriebswelle unterbrochen ist und in die das die thermische Ausdehnung ausgleichende (elastische) Material eingelegt wird. Bei dieser Ausführungsform liegt die Dichtmanschette zwar mit diesem Material an der Innenwandung bzw. der Innenverkleidung des Ventilgehäuses an, dadurch, dass die Dichtmanschette aber üblicherweise in dem Gehäuse in axialer Richtung beiderseits verpresst ist, tritt dieses Material nicht mit dem durch das Ventil geförderte Fluid in Kontakt.

Weiterhin kann zwischen dem Boden der Nut und dem eingelegten Material ein Luftpolster vorgesehen sein, das als Dämpfer bzw. elastische Luftfeder wirken kann. Dabei kann das Luftpolster durch das axiale Verpressen des Einlegematerials, z. B. eines Rings oder Ringsegments, und der Axialwandung der Nut bei der Montage gebildet werden.

In einer weiteren bevorzugten Ausführungsform der Erfindung kann das die thermische Ausdehnung ausgleichende Material in das Dichtmanschettenmaterial eingegossen oder eingespritzt werden. Hierbei kann es vollständig von dem Dichtmanschettenmaterial umschlossen werden. Vorteil dieser "einteiligen" Ausführungsform ist der geringere Aufwand bei der Montage und der mit dieser Maßnahme realisierte Verlierschutz des eingebrachten Materials.

Um einer Erhöhung der Reibwerte bei Temperaturerhöhung entgegenzuwirken, wird das die thermische Ausdehnung ausgleichende Material im Bereich der Anlagefläche der Ventilklappe, d.h. im Bereich des Dichtsitzes, in die Dichtmanschette eingebracht. Damit ist gewährleistet, dass der Durchmesser der Durchgangsöffnung sich nicht wesentlich verringert und die durch die Dichtmanschette auf die Ventilklappe ausgeübten Reibungskräfte weitgehend konstant bleiben bzw. sich nicht zu stark erhöhen. Es ist aber auch denkbar, darüber hinaus weitere Einlegeteile in den axial weiter außen liegenden Randbereichen am Aussenumfang der Dichtmanschette zu integrieren.

Ein besonders geeignetes Material zum Ausgleich der thermischen Ausdehnungsunterschiede ist Graphit. Graphit besitzt eine thermische Ausdehnung, die in der Größenordnung der thermischen Ausdehnung von üblichem Werkzeug- oder Edelstahl liegt (ca. 12 · 10⁻⁶ 1/K). Darüber hinaus ist Graphit in gepresster oder geflochtener Form (Graphitfasern) etwa so elastisch wie das Elastomermaterial. Die elastischen Eigenschaften der Dichtmanschette werden durch die Graphiteinlage somit nicht beeinträchtigt. Das Graphitmaterial kann in Form von Ringen bzw. Ringsegmenten (zwischen den Durchgangsbohrungen) in das Elastomermaterial eingebracht bzw. in die oben beschriebene Nut im Aussenumfang eingelegt werden. Die solchermaßen eingelegten Graphitringe haben den weiteren Vorteil, dass die Dichtmanschette versteift und die Gefahr des Herausziehens der Dichtmanschette aus der Durchgangsöffnung bei Anlegen von Vakuum verringert wird.

Weitere geeignet Materialien sind Kohle, Kohlefasern sowie mit Graphit, Kohle, Bornitrid und/oder Metallen befüllte Elastomere oder Thermoplaste.

Nachfolgend wird die Erfindung anhand der Figuren näher erläutert.

Es zeigen:
- Figur 1: in perspektivischer Darstellung eine Dichtmanschette gemäß der Erfindung;
- Figur 2: in einer schematischen Längsschnittdarstellung eine Teilansicht einer erfindungsgemäßen Dichtmanschette.

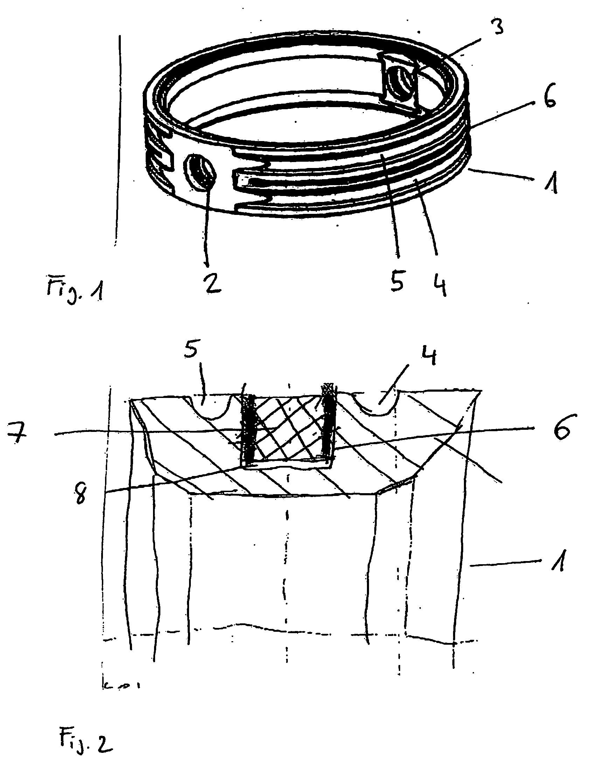

Man erkennt in Fig. 1 eine Dichtmanschette 1, die eine im wesentlichen hohlzylinderförmige Gestalt hat. Die Dichtmanschette 1 weist an zwei diametral einander gegenüberliegenden Stellen Durchgangsbohrungen 2, 3 für die Antriebswelle der hier nicht dargestellten Ventilklappe auf. Zur Erhöhung der Dichtwirkung ist die Dichtmanschette um diese Durchgangsbohrungen 2, 3 herum verstärkt. Am Außenumfang sind umlaufende Entlastungsrillen 4, 5 zu erkennen, die beiderseits des Dichtsitzes angeordnet sind. Im Bereich des Dichtsitzes weist die Dichtmanschette gemäß einer bevorzugten Ausführungsform der Erfindung eine umlaufende Nut 6 auf, in die Ringe 7 aus Graphit eingelegt sind. Die umlaufende Nut 6 bzw. die Graphitringe 7 sind im Bereich der Durchgangsbohrungen 4, 5 unterbrochen.

Fig. 2 zeigt die Dichtmanschette aus Figur 1 in einer Schnittdarstellung. Gemäß einer weiteren bevorzugten Ausführungsfrom der Erfindung ist zwischen dem Boden der Nut 6 und der radial nach innen weisenden Fläche des Graphitrings 7 ein Luftpolster 8 eingeschlossen, das so als Luftfeder wirkt.

## Patentansprüche

1. Klappenventil mit einem Ventilgehäuse mit einer Ventilgehäuseinnenwandung, einer Ventilklappe und einer Dichtmanschette aus gummielastischem Material zum Abdichten zwischen der Ventilgehäuseinnenwandung und der Ventilklappe, wobei das gummielastische Material wenigstens im Bereich der Anlagefläche der Ventilklappe wenigstens teilweise durch ein Material ersetzt ist, dessen thermische Ausdehnung in etwa der des Gehäusematerials entspricht oder geringer ist und dessen elastischen Eigenschaften in etwa denen des Dichtmanschettenmaterials entsprechen.

2. Klappenventil nach Anspruch 1, **dadurch gekennzeichnet, dass** das Material in wenigstens eine ringförmige Nut (6) im Aussenumfang der Dichtmanschette (1) einlegbar ist.

3. Klappenventil nach Anspruch 2, **dadurch gekennzeichnet, dass** zwischen dem Boden der Nut (6) und dem eingelegten Material eine Luftpolster (8) vorgesehen ist.

4. Klappenventil nach Anspruch 1, **dadurch gekennzeichnet, dass** das Material in das Dichtmanschettenmaterial eingegossen oder eingespritzt ist.

5. Klappenventil nach einem der Ansprüche 1 bis 4, **dadurch gekennzeichnet, dass** das Material Graphit oder Graphitfasern umfasst.

6. Klappenventil nach einem der Ansprüche 1 bis 4, **dadurch gekennzeichnet, dass** das Material Kohle oder Kohlefasern umfasst.

7. Klappenventil nach einem der Ansprüche 1 bis 6, **dadurch gekennzeichnet, dass** das Material ein mit Graphit, Kohle, Bornitrid und/oder Metall befülltes Elastomer umfasst.

8. Klappenventil nach einem der Ansprüche 1 bis 6, **dadurch gekennzeichnet, dass** das Material einen mit Graphit, Kohle, Bornitrid und/oder Metall befüllten Thermoplasten umfasst.

9. Klappenventil nach einem der Ansprüche 5 bis 8, **dadurch gekennzeichnet, dass** das Material als Vollkörper in Form von Ringen und/oder Ringsegmenten in die Dichtmanschette eingebracht wird.

## Claims

1. Flap valve with a valve housing having a valve-housing inner wall, with a valve flap and with a sealing cuff consisting of elastomeric material, for sealing off between the valve-housing inner wall and the valve flap, the elastomeric material being replaced, at least in the region of the varying face of the valve flap, at least partially by a material, the thermal expansion of which corresponds approximately to or is lower than that of the housing material and the elastic properties of which correspond approximately to those of the sealing-cuff material.

2. Flap valve according to Claim 1, **characterized in that** the material can be introduced into at least one annular groove (6) in the outer circumference of the sealing cuff (1).

3. Flap valve according to Claim 2, **characterized in that** an air cushion (8) is provided between the bottom of the groove (6) and the introduced material.

4. Flap valve according to Claim 1, **characterized in that** the material is cast or injected into the sealing-cuff material.

5. Flap valve according to one of Claims 1 to 4, **characterized in that** the material comprises graphite or graphite fibres.

6. Flap valve according to one of Claims 1 to 4, **characterized in that** the material comprises carbon or carbon fibres.

7. Flap valve according to one of Claims 1 to 6, **characterized in that** the material comprises an elastomer filled with graphite, carbon, boron nitride and/or metal.

8. Flap valve according to one of Claims 1 to 6, **characterized in that** the material comprises a thermal plastic filled with graphite, carbon, boron nitride and/or metal.

9. Flap valve according to one of Claims 5 to 8, **characterized in that** the material is introduced as a solid body in the form of rings and/or ring segments into the sealing cuff.

## Revendications

1. Soupape à clapet dotée d'un boîtier de soupape qui présente une paroi intérieure de boîtier de soupape, d'un clapet de soupape et d'une manchette d'étanchéité en matériau élastique caoutchouteux qui assure l'étanchéité entre la paroi intérieure du boîtier de soupape et le clapet de soupape, le matériau élastique caoutchouteux étant remplacé partiellement, au moins dans la zone occupée par la surface de pose du clapet de soupape, par un matériau dont la dilatation thermique correspond sensiblement à celle du matériau du boîtier ou lui est inférieure et dont les propriétés élastiques correspondent sensiblement à celles du matériau de la manchette d'étanchéité.

2. Soupape à clapet selon la revendication 1, **caractérisée en ce que** le matériau peut être placé dans au moins une rainure annulaire (6) située à la périphérie extérieure de la manchette d'étanchéité (1).

3. Soupape à clapet selon la revendication 2, **caractérisée en ce qu'**un coussin d'air (8) est prévu entre le fond de la rainure (6) et le matériau qui y est placé.

4. Soupape à clapet selon la revendication 1, **caractérisée en ce que** le matériau est coulé ou injecté dans le matériau de la manchette d'étanchéité.

5. Soupape à clapet selon l'une des revendications 1 à 4, **caractérisée en ce que** le matériau contient du graphite ou des fibres de graphite.

6. Soupape à clapet selon l'une des revendications 1 à 4, **caractérisée en ce que** le matériau contient du carbone ou des fibres de carbone.

7. Soupape à clapet selon l'une des revendications 1 à 6, **caractérisée en ce que** le matériau contient un élastomère chargé de graphite, de carbone, de nitrure de bore et/ou de métal.

8. Soupape à clapet selon l'une des revendications 1 à 6, **caractérisée en ce que** le matériau contient un thermoplastique chargé de graphite, de carbone, de nitrure de bore et/ou de métal.

9. Soupape à clapet selon l'une des revendications 5 à 8, **caractérisée en ce que** le matériau est inséré dans la manchette d'étanchéité comme corps massif qui présente la forme d'anneaux et/ou de segments annulaires.
